# EUROPEAN PATENT APPLICATION

(11) **EP 4 068 765 A1**
(43) Date of publication of application: **05.10.2022**
(21) Application number: 20895445.3
(22) Date of filing: 02.12.2020
(51) Int. Cl.: H04N 13/00

(54) **MULTI-VIEWPOINT 3D DISPLAY DEVICE AND 3D IMAGE DISPLAY METHOD**

(30) Priority: 05.12.2019 CN 201911231146
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133325
(87) International publication number: WO 2021/110032

(57) **Abstract**

The present application relates to the technical field of 3D display, and discloses a multi-viewpoint 3D display method, comprising: obtaining a distance between a user and a multi-viewpoint 3D display screen; and dynamically rendering subpixels in composite subpixels in the multi-viewpoint 3D display screen based on 3D signals in response to a change in a distance. The method can implement flexible projection from multiple viewpoints. The present application further discloses a multi-viewpoint 3D display device, a computer readable storage medium, and a computer program product.

## Description

The present application claims priority to the Chinese Patent Application with an application number of 2019112311466 and a title of "Multi-viewpoint Naked-eye 3D Display Device and 3D Image Display Method", filed to China National Intellectual Property Administration on December 5th, 2019, the disclosures of which are hereby incorporated by reference.

### TECHNICAL FIELD

The present application relates to a 3D display technology, and, for example, relates to a multi-viewpoint 3D display device and a 3D image display method.

### BACKGROUND

At present, the 3D display technology uses a plurality of independent pixels of a display panel to project multiple viewpoints of space.

In the process of implementing embodiments of the present disclosure, it is found that there are at least the following problems in the related technology: a traditional projection mode is single and is not suitable for occasions in which a viewing situation changes, such as a situation that a user is far away from or close to a display panel.

The background is intended to facilitate understanding of related technologies in the field only, and is not taken as an acknowledgement of an existing technology.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a multi-viewpoint 3D display device, a 3D image display method, a computer readable storage medium, and a computer program product, to solve problems of single multi-viewpoint projection mode and transmission.

In some embodiments, a multi-viewpoint 3D display method is disclosed, comprising: obtaining a distance between a user and a multi-viewpoint 3D display screen; and dynamically rendering subpixels in composite subpixels in the multi-viewpoint 3D display screen based on 3D signals in response to a change of the distance.

In some embodiments, dynamically rendering subpixels in composite subpixels in the multi-viewpoint 3D display screen based on 3D signals comprises: dynamically rendering subpixels in composite subpixels in the multi-viewpoint 3D display screen in a manner of getting close relative to each other in response to increase of a distance between eyes of the user and the multi-viewpoint 3D display screen.

In some embodiments, the multi-viewpoint 3D display method further comprises: switching to 2D display when a subpixel to be rendered is a same subpixel in the composite subpixels.

In some embodiments, dynamically rendering subpixels in composite subpixels in the multi-viewpoint 3D display screen based on 3D signals comprises: dynamically rendering subpixels in composite subpixels in the multi-viewpoint 3D display screen in a manner of getting away relative to each other in response to decrease of a distance between eyes of the user and the multi-viewpoint 3D display screen.

In some embodiments, the multi-viewpoint 3D display method further comprises: switching to 2D display when a subpixel to be rendered exceeds an outermost subpixel of the composite subpixels.

In some embodiments, the multi-viewpoint 3D display method further comprises: switching to 2D display in response to that a distance between eyes of the user and the multi-viewpoint 3D display screen is less than a first distance threshold.

In some embodiments, the multi-viewpoint 3D display method further comprises: switching to 2D display, wherein the second distance threshold is greater than the first distance threshold in response to that a distance between eyes of the user and the multi-viewpoint 3D display screen is larger than a second distance threshold.

In some embodiments, the multi-viewpoint 3D display method further comprises: detecting at least two users to obtain position information of the at least two users; determining a priority user based on the position information of the at least two users; and rendering subpixels in composite subpixels in the multi-viewpoint 3D display screen based on 3D signals according to a viewpoint where eyes of the priority user locate.

In some embodiments, determining the priority user based on the position information of the at least two users comprises: ranking priorities of the at least two users based on distances between faces of the at least two users and the multi-viewpoint 3D display screen, and determining the priority user according to a ranking result.

In some embodiments, rendering subpixels in composite subpixels in the multi-viewpoint 3D display screen based on 3D signals according to a viewpoint where eyes of the priority user locate comprises: obtaining viewpoints where respective eyes of the at least two users locate; and rendering a subpixel, corresponding to a viewpoint where eyes of the priority user locate, in composite subpixels in the multi-viewpoint 3D display screen based on 3D signals in response to a conflict between viewpoints where eyes of the priority user and other users locate.

In some embodiments, a multi-viewpoint 3D display device is disclosed, comprising: a multi-viewpoint 3D display screen which comprises a plurality of composite pixels, wherein each of the plurality of composite pixels comprises a plurality of composite subpixels, and each composite subpixel of the plurality of composite subpixels comprises a plurality of subpixels corresponding to a plurality of viewpoints; an eye positioning apparatus, configured to obtain a distance between a user and the multi-viewpoint 3D display screen; and a 3D processing apparatus, configured to, trigger the multi-viewpoint 3D display screen based on 3D signals to dynamically render subpixels in the plurality of composite subpixels in response to a change of the distance.

In some embodiments, the 3D processing apparatus is configured to trigger the multi-viewpoint 3D display screen in response to increase of a distance between the user and the multi-viewpoint 3D display screen to dynamically render subpixels in composite subpixels in a manner of getting close relative to each other.

In some embodiments, the 3D processing apparatus is configured to trigger the multi-viewpoint 3D display screen to switch to 2D display when a subpixel to be rendered is a same subpixel in the composite subpixels.

In some embodiments, the 3D processing apparatus is configured to trigger the multi-viewpoint 3D display screen in response to decrease of a distance between eyes of the user and the multi-viewpoint 3D display screen to dynamically render subpixels in composite subpixels in a manner of getting away relative to each other.

In some embodiments, the 3D processing apparatus is configured to trigger the multi-viewpoint 3D display screen to switch to 2D display when a subpixel to be rendered exceeds an outermost subpixel of the composite subpixels.

In some embodiments, the 3D processing apparatus is configured to trigger the multi-viewpoint 3D display screen to switch to 2D display in response to that a distance between eyes of the user and the multi-viewpoint 3D display screen is less than a first distance threshold.

In some embodiments, the 3D processing apparatus is configured to trigger the multi-viewpoint 3D display screen to switch to 2D display in response to that a distance between eyes of the user and the multi-viewpoint 3D display screen is larger than a second distance threshold, wherein the second distance threshold is greater than the first distance threshold.

In some embodiments, the multi-viewpoint 3D display device comprises: a face detection apparatus, configured to detect at least two users to obtain position information of the at least two users; a priority logic circuit, configured to determine a priority user based on the position information of the at least two users; and the 3D processing apparatus, configured to render subpixels in composite subpixels in the multi-viewpoint 3D display screen based on the 3D signals according to a viewpoint where eyes of the priority user locate.

In some embodiments, the priority logic circuit is configured to rank priorities of the at least two users based on distances between faces of the at least two users and the multi-viewpoint 3D display screen, and determine the priority user according to a ranking result.

In some embodiments, the multi-viewpoint 3D display device further comprises: an eye positioning apparatus, configured to obtain viewpoints where respective eyes of the at least two users locate; and the 3D processing apparatus, configured to trigger the multi-viewpoint 3D display screen based on the 3D signals to render a subpixel, corresponding to a viewpoint where eyes of the priority user locate, in composite subpixels in response to a conflict between viewpoints where eyes of the priority user and other users locate.

In some embodiments, a multi-viewpoint 3D display device is disclosed, comprising: a processor; and a memory storing program instructions, wherein the processor is configured to execute the above method when executing the program instructions.

A computer readable storage medium provided by embodiments of the present disclosure stores computer-executable instructions; and the computer-executable instructions are configured to execute the 3D image display method.

A computer program product provided by embodiments of the present disclosure comprises computer programs stored on a computer readable storage medium, the computer programs comprise program instructions, and a computer executes the 3D image display method when the program instructions are executed by the computer.

The 3D image display method and the multi-viewpoint 3D display device applied to the multi-viewpoint 3D display screen, the computer readable storage medium and the computer program product provided by the embodiments of the present disclosure can achieve the following technical effects:
Through the eye positioning apparatus, eye positioning data can be obtained in real time, and multi-viewpoint projection can be adjusted in time according to a viewing situation, thereby realizing 3D display with high flexibility.

The above general description and the description below are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Figs. 1A to 1C are schematic diagrams of a multi-viewpoint 3D display device according to embodiments of the present disclosure;
Fig. 2 is an image of a 3D video signal according to embodiments of the present disclosure;
Figs. 3A to 3B are schematic diagrams of dynamically rendering subpixels according to embodiments of the present disclosure;
Figs. 4A to 4C are subpixel rendering in the case of a conflict between viewpoint positions of eyes of multiple users according to embodiments of the present disclosure;
Fig. 5 is a 3D image display method applied to a multi-viewpoint 3D display screen according to embodiments of the present disclosure; and
Fig. 6 is a schematic diagram of a multi-viewpoint 3D display device according to embodiments of the present disclosure.

Reference numerals:
100: multi-viewpoint 3D display device; 110: multi-viewpoint 3D display screen; 120: processor; 121: register; 130: 3D processing apparatus; 131: buffer; 140: 3D signal interface; 150: eye positioning apparatus; 160: eye positioning data interface; 300: multi-viewpoint 3D display device; 310: memory; 320: processor; 330: bus; 340: communication interface; 400: composite pixel; 410: red composite subpixel; 420: green composite subpixel; 430: blue composite subpixel; 601: one of images of a 3D video signal; and 602: one of images of a 3D video signal.

### DETAILED DESCRIPTION

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

According to embodiments of the present disclosure, a multi-viewpoint 3D display device is provided. The device defines a plurality of viewpoints and comprises a multi-viewpoint 3D display screen (e.g. a multi-viewpoint naked-eye 3D display screen), a video signal interface, an eye positioning apparatus and a 3D processing apparatus. The multi-viewpoint 3D display screen comprises a plurality of composite pixels, each composite pixel comprises a plurality of composite subpixels, and each composite subpixel is composed of a plurality of subpixels corresponding to the number of viewpoints of the multi-viewpoint 3D display device. The video signal interface is configured to receive an image of a 3D video signal. The eye positioning apparatus is configured to obtain eye positioning data. The 3D processing apparatus is configured to trigger the multi-viewpoint 3D display screen based on the 3D signals to dynamically render subpixels in the plurality of composite subpixels in response to a change in a distance between a user and the 3D display screen.

In some embodiments, each composite subpixel is composed of a plurality of homochromatic subpixels corresponding to the number of viewpoints of the multi-viewpoint 3D display device.

In some embodiments, the subpixels in each composite subpixel are in a one-to-one relationship with the viewpoints of the multi-viewpoint 3D display device.

In some embodiments, the multi-viewpoint 3D display device has at least three viewpoints, and each composite subpixel has at least three subpixels accordingly.

In some embodiments, the 3D signal is an image of a 3D video signal.

In some embodiments, the 3D processing apparatus is in communication connection with the multi-viewpoint 3D display screen. In some embodiments, the 3D processing apparatus is in communication connection with a driver of the multi-viewpoint 3D display screen.

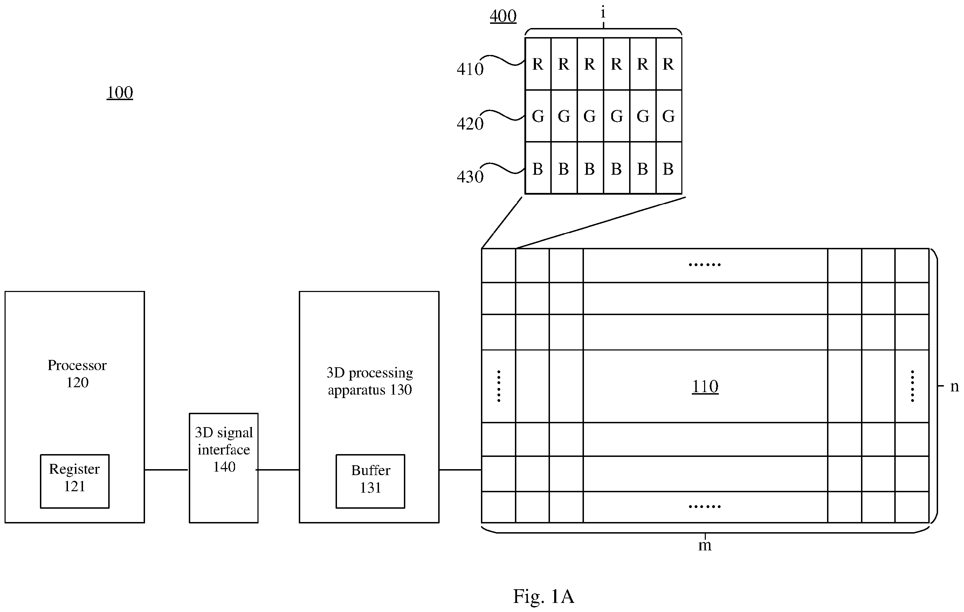

Fig. 1A shows a multi-viewpoint 3D display device 100 according to an embodiment of the present disclosure. As shown in Fig. 1A, the multi-viewpoint 3D display device 100 comprises a multi-viewpoint 3D display screen 110, a 3D processing apparatus 130, a 3D signal interface 140 which receives an image of a 3D signal such as a 3D video signal and a processor 120.

The multi-viewpoint 3D display screen 110 may comprise m columns and n rows (m×n) of composite pixels 400, thereby defining a display resolution of m×n. In some embodiments, the display resolution of m×n may be a resolution greater than full high definition (FHD), including but not limited to: 1920×1080, 1920×1200, 2048×1280, 2560×1440, 3840×2160, etc.

Fig. 1A schematically shows one composite pixel 400 in the m×n composite pixels, comprising a red composite subpixel 410 composed of i=6 red subpixels R, a green composite subpixel 420 composed of i=6 green subpixels G, and a blue composite subpixel 430 composed of i=6 blue subpixels B. The multi-viewpoint 3D display device 100 has six viewpoints (V1-V6).

In some embodiments, each composite pixel is square. All the composite subpixels in each composite pixel may be arranged in parallel with each other. The i subpixels in each composite subpixel may be arranged in rows.

In embodiments of the present disclosure, each composite subpixel has a corresponding subpixel corresponding to a viewpoint. A plurality of subpixels of each composite subpixel are arranged in rows in a horizontal direction of the multi-viewpoint 3D display screen, and colors of the plurality of subpixels in rows are the same. Since the plurality of viewpoints of the 3D display device are arranged approximately in the horizontal direction of the multi-viewpoint 3D display screen, different subpixels, corresponding to the corresponding viewpoints, in each composite subpixel need to be dynamically rendered correspondingly when eyes are located at the different viewpoints due to user movement. Since the homochromatic subpixels in each composite subpixel are arranged in rows, a cross-color problem caused by visual persistence can be avoided. In addition, due to refraction of a raster, it is possible to see a part of the current display subpixel at an adjacent viewpoint position. However, through homochromatic arrangement in the same rows, even if a part of the current display subpixel is seen, a problem of color mixing will not occur.

In some embodiments, the 3D processing apparatus is an FPGA or ASIC chip or an FPGA or ASIC chipset. According to the embodiment as shown in Fig. 1A, the 3D processing apparatus 130 may further optionally comprise a buffer 131, so as to buffer an image of a received 3D video signal.

The multi-viewpoint 3D display device 100 may further comprise a processor 120 in communication connection with the 3D processing apparatus 130 through a 3D signal interface 140. In some embodiments, the processor 120 is included in a computer or an intelligent terminal such as a mobile terminal, or used as a processor unit.

In some embodiments, the 3D signal interface 140 is an internal interface connecting the processor 120 and the 3D processing apparatus 130. The multi-viewpoint 3D display device 100 may be, for example, a mobile terminal. The video signal interface 140 may be an MIPI, a mini-MIPI, an LVDS interface, a min-LVDS interface, or a Display Port.

In some embodiments, as shown in Fig. 1A, the processor 120 of the multi-viewpoint 3D display device 100 may further comprise a register 121. The register 121 may be configured to temporarily store instructions, data and addresses.

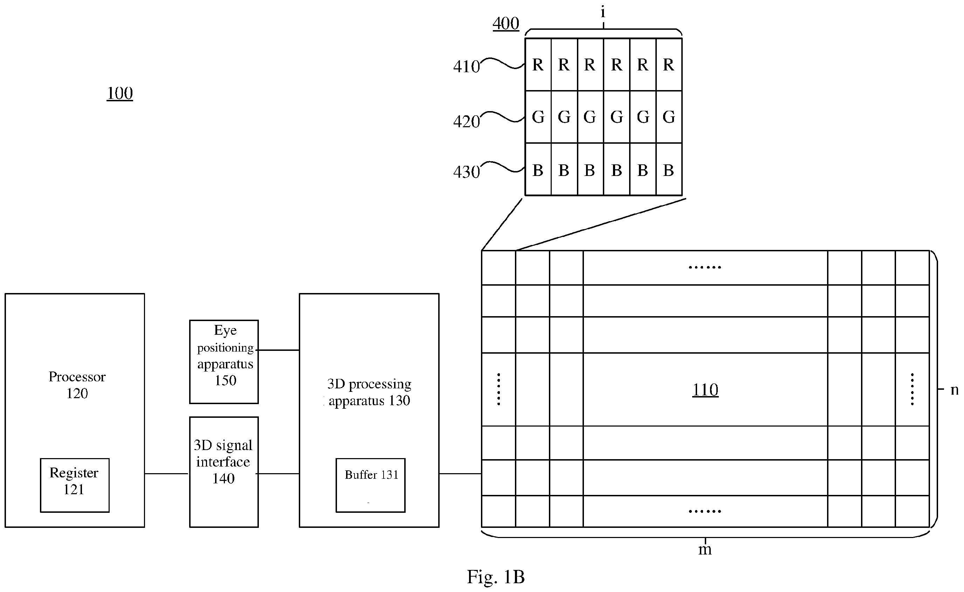

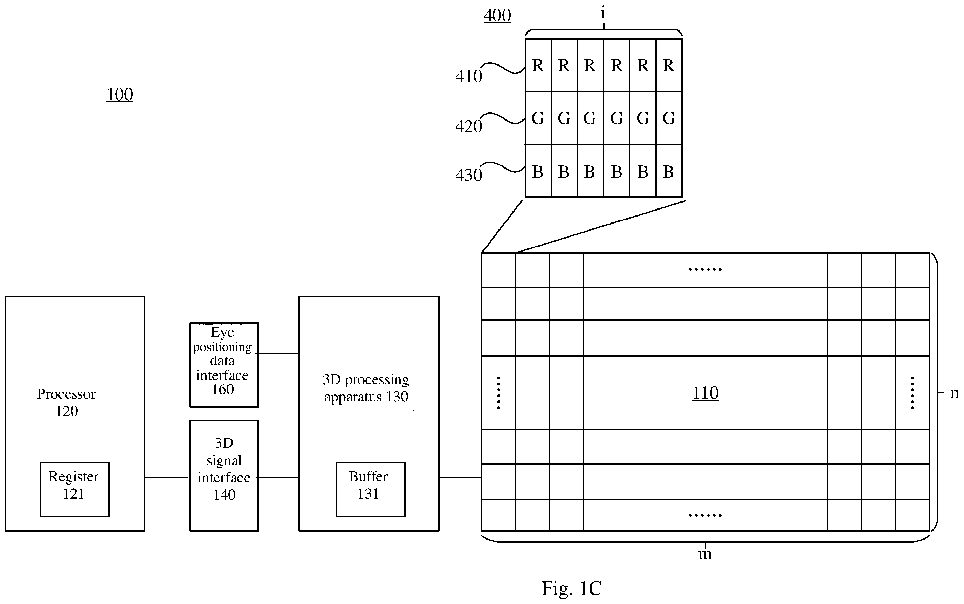

In some embodiments, the multi-viewpoint 3D display device further comprises an eye positioning apparatus or an eye positioning data interface configured to obtain eye positioning data. For example, in an embodiment as shown in Fig. 1B, the multi-viewpoint 3D display device 100 comprises an eye positioning apparatus 150 in communication connection with the 3D processing apparatus 130. In this way, the 3D processing apparatus 130 can directly receive eye positioning data. In an embodiment as shown in Fig. 1C, the eye positioning apparatus (not shown) may, for example, be directly connected to the processor 120, and the 3D processing apparatus 130 obtains eye positioning data from the processor 120 through an eye positioning data interface 160. In some other embodiments, the eye positioning apparatus may be connected to the processor and the 3D processing apparatus at the same time. Hence, on the one hand, the 3D processing apparatus 130 can directly obtain the eye positioning data from the eye positioning apparatus, and on the other hand, other information obtained by the eye positioning apparatus can be processed by a processing unit.

In some embodiments, the eye positioning data includes eye spatial position information indicating an eye spatial position of a user. The eye spatial position information may be expressed in a form of three-dimensional coordinates. For example, the information includes information of a distance between eyes/a face of the user and the multi-viewpoint 3D display screen or the eye positioning apparatus (i.e., depth information of the eyes/face of the user), position information of the viewed eyes/face in a horizontal direction of the multi-viewpoint 3D display screen or the eye positioning apparatus, and position information of the eyes/face of the user in a vertical direction of the multi-viewpoint 3D display screen or the eye positioning apparatus. The eye spatial position may also be expressed in a form of two-dimensional coordinates including any two of distance information, horizontal position information and vertical position information. The eye positioning data may further comprise a viewpoint (viewpoint position) of the eyes (e.g. both eyes) of the user, a user viewing angle, etc.

In some embodiments, the eye positioning apparatus comprises an eye locator configured to capture a user image (e.g. a user face image), an eye positioning image processor configured to determine an eye spatial position based on the captured user image, and an eye positioning data interface configured to transmit eye spatial position information. The eye spatial position information indicates the eye spatial position.

In some embodiments, the eye locator comprises a first camera configured to capture a first image and a second camera configured to capture a second image, and the eye positioning image processor is configured to recognize presence of eyes based on at least one of the first image and the second image and to determine an eye spatial position based on the recognized eyes.

In some embodiments, the eye locator comprises at least one camera configured to capture at least one image and a depth detector configured to obtain eye depth information of a user, and the eye positioning image processor is configured to recognize presence of eyes based on the at least one captured image, and to determine an eye spatial position based on the recognized eyes and the eye depth information.

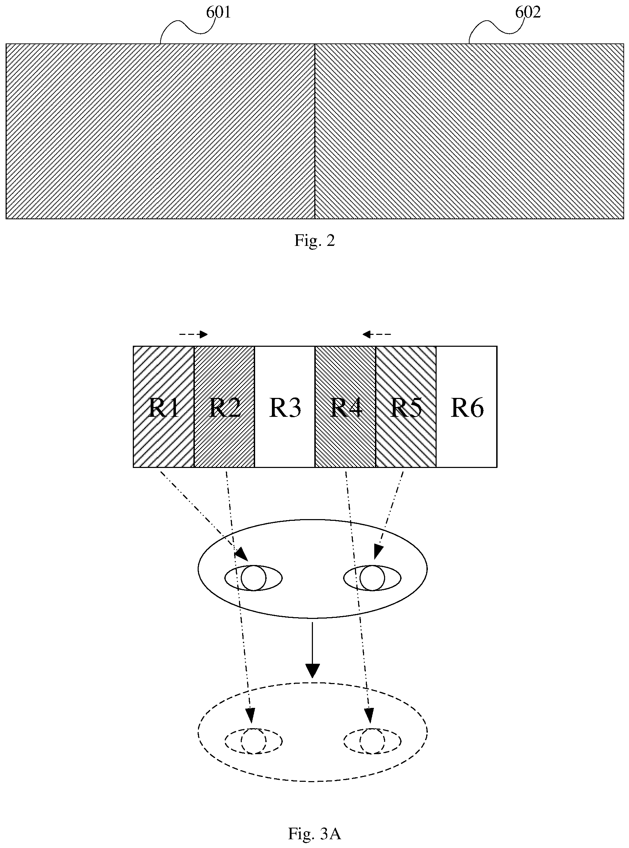

Transmission and display of an image of a 3D video signal in the multi-viewpoint 3D display device 100 according to embodiments of the present disclosure will be described below with reference to Fig. 2. As described above, the multi-viewpoint 3D display device 100 may define a plurality of viewpoints. The eyes of the user can see display of a corresponding subpixel, in the composite subpixels, of each composite pixel 400 in the multi-viewpoint 3D display screen 110 at the spatial position corresponding to the viewpoint. Two different images seen by the eyes of the user from different viewpoints form a parallax, which composites an 3D image in a brain.

In some embodiments of the present disclosure, the 3D processing apparatus 130 receives an image such as a decompressed 3D video signal from the processor 120 via the 3D signal interface 140 such as an internal interface. Each image may include two images or be a composite image, or may be composed of the image.

In some embodiments, the two images or the composite image may be different types of images and may be in various arrangements.

As shown in Fig. 2, the image of the 3D video signal includes or is composed of two parallel images 601 and 602. In some embodiments, the two images may be a left-eye parallax image and a right-eye parallax image respectively. In some embodiments, the two images may be a rendered color image and a depth-of-field image, respectively.

In some embodiments, the image of the 3D video signal is an interleaved composite image. In some embodiments, the composite image may be an interleaved left-eye and right-eye parallax composite image, an interleaved rendered color and a depth-of-field composite image.

In some embodiments, after receiving the two images 601 and 602 of the 3D video signal, at least one 3D processing apparatus 130 triggers the multi-viewpoint 3D display screen based on one of the two images to render at least one subpixel in each composite subpixel and triggers the multi-viewpoint 3D display screen based on the other one of the two images to render at least one subpixel in each composite subpixel.

In other embodiments, after receiving the composite image, at least one 3D processing apparatus triggers the multi-viewpoint 3D display screen based on the composite image to render at least two subpixels in each composite subpixel. For example, the multi-viewpoint 3D display screen is triggered to render at least one subpixel in the composite subpixels based on a first image (part) in the composite image, and the multi-viewpoint 3D display screen is triggered to render at least another subpixel in the composite subpixels based on a second image (part).

The 3D processing apparatus can trigger the multi-viewpoint 3D display screen to dynamically render related subpixels in each composite subpixel in the multi-viewpoint 3D display screen based on real-time eye positioning data, so as to adapt to a change of a viewing situation. In embodiments of the present disclosure, dynamic rendering of related subpixels in each composite subpixel covers rendering of related subpixels in all composite subpixels in substantially the entire display screen, or the case where there is a process error between the subpixels in each composite subpixel and the viewpoint, or both.

Fig. 3A schematically shows one embodiment of dynamic rendering of a 3D processing apparatus, with dynamic rendering of red subpixels R in a red composite subpixel as an example. Dynamic rendering of subpixels in other color composite subpixels is also processed in this way. As shown in Fig. 3A, when the user moves in a direction indicated by a solid arrow and away from the multi-viewpoint 3D display screen, the eye positioning apparatus judges that a distance between the user and the multi-viewpoint 3D display screen increases based on the detected spatial position information (data) of the eyes or face of the user, or the 3D processing apparatus judges that a distance between the user and the multi-viewpoint 3D display screen decreases based on the spatial position information (data) of the eyes or face of the user, which is detected by the eye positioning apparatus. In response to the increase of a distance, the 3D processing apparatus triggers the multi-viewpoint 3D display screen to dynamically render red subpixels in red composite subpixels, such as at least two red subpixels, in a manner of getting close to each other. As shown in Fig. 3A, in response to the increase of a distance between the user and the multi-viewpoint 3D display screen, the 3D processing apparatus triggers the multi-viewpoint 3D display screen to dynamically adjust the rendering of the red subpixels R1 and R5 associated with an initial viewpoint position of the eyes of the user to the rendering of the red subpixels R2 and R4 associated with a subsequent viewpoint position of the eyes of the user. Dynamic rendering of subpixels which move close to each other is shown by a dashed arrow in Fig. 3A. The red subpixels R2 and R4 move close to each other relative to the red subpixels R1 and R5. The rendered subpixel in the composite subpixel is a subpixel corresponding to the viewpoint position where the eyes are located, which is determined by eye positioning data.

When the user continues to move away from the multi-viewpoint 3D display screen, a distance between the user and the multi-viewpoint 3D display screen continues to increase, and the 3D processing apparatus triggers the multi-viewpoint 3D display screen to continue to dynamically render subpixels in each composite subpixel, such as at least two subpixels, in a manner of getting close to each other. In this way, the rendered subpixels in the composite subpixels move close to each other to coincide at a same subpixel or will move close to each other to coincide at the same subpixel, i.e. the same subpixel in the composite subpixel is rendered or will be rendered. For example, as further shown in Fig. 3A, as a distance between the user and the multi-viewpoint 3D display screen continues to increase, the red subpixels to be rendered next will continue to move close to each other relative to the red subpixels R2 and R4 until they coincide at the red subpixel R3. In other words, corresponding to the viewpoint position where the eyes of the user are located, when the user reaches a certain distance away from the multi-viewpoint 3D display screen, there may be a situation where the same subpixel R3 is rendered in order to form a left-eye parallax image and a right-eye parallax image. In the case of dynamically rendering the subpixels in the composite subpixel in a manner of getting close relative to each other, when the same subpixel in the composite subpixels is rendered, the 3D processing apparatus triggers the multi-viewpoint 3D display screen to switch to 2D display. In other words, in some embodiments of the present disclosure, dynamic rendering of the subpixels that move close to each other or will coincide with each other may be determined by a change in the viewpoints due to a change of the distance. In some embodiments, the change in a distance may be simply detected for determination. For example, there is a correspondence between a distance and the subpixels being dynamically rendered, such as switching to 2D beyond or within a threshold of a predetermined distance, as described in some embodiments below.

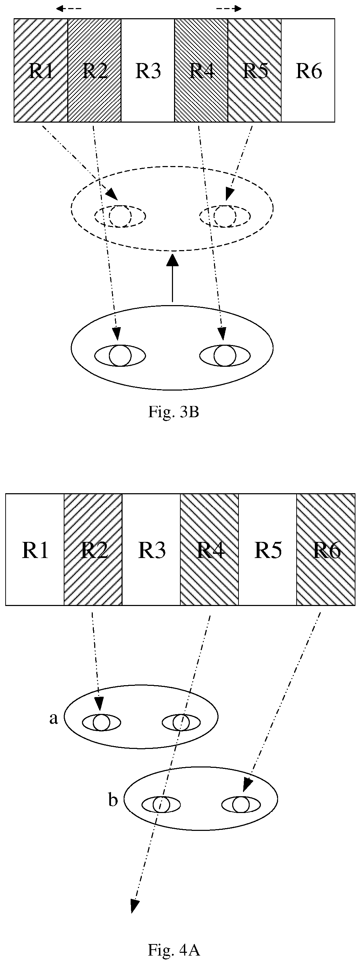

Fig. 3B schematically shows another embodiment of dynamic rendering of the 3D processing apparatus, with dynamic rendering of red subpixels R in a red composite subpixel as an example. Dynamic rendering of subpixels in other color composite subpixels is also processed in this way. As shown in Fig. 3B, when the user moves in a direction indicated by a solid arrow and moves close to the multi-viewpoint 3D display screen, the eye positioning apparatus judges that a distance between the user and the multi-viewpoint 3D display screen decreases based on detected spatial position information (data) of the eyes or face the user, or the 3D processing apparatus judges that a distance between the user and the multi-viewpoint 3D display screen decreases based on the spatial position information (data) of the eyes or face of the user, which is detected by the eye positioning apparatus. In response to the decrease of a distance, the 3D processing apparatus triggers the multi-viewpoint 3D display screen to dynamically render red subpixels in a composite subpixel, such as at least two red subpixels, in a manner of moving relative to each other. As shown in Fig. 3B, in response to the decrease of a distance between the user and the multi-viewpoint 3D display screen, the 3D processing apparatus triggers the multi-viewpoint 3D display screen to dynamically adjust the rendering of red subpixels R2 and R4 associated with an initial viewpoint position of both eyes of the user to the rendering of red subpixels R1 and R5 associated with a subsequent viewpoint position of both eyes of the user. Dynamic rendering of subpixels away from each other is shown by a dashed arrow in Fig. 3B. The red subpixels R1 and R5 move away from each other relative to the red subpixels R2 and R4. The rendered subpixel in the composite subpixel is a subpixel corresponding to the viewpoint position where the eyes are located, which is determined by eye positioning data.

When the user continues to move close to the multi-viewpoint 3D display screen, a distance between the user and the multi-viewpoint 3D display screen continuing to decrease, and the 3D processing apparatus triggers the multi-viewpoint 3D display screen to continue to dynamically render subpixels in each composite subpixel, such as at least two subpixels, in a manner of getting away relative to each other. In this way, the rendered subpixels in the composite subpixel move away from each other till they eventually exceed or will exceed outmost subpixels in the corresponding composite subpixel. For example, as further shown in Fig. 3B, as a distance between the user and the multi-viewpoint 3D display screen continues to decrease, a red subpixel to be rendered next will continue to move away from each other relative to the red subpixels R1 and R5 until it will exceed the outermost subpixels R1 and R6 in the red composite subpixel. In other words, corresponding to a viewpoint position of both eyes of the user, when the user moves close to the multi-viewpoint 3D display screen to a certain distance, a subpixel corresponding to a current user viewpoint cannot be found in at least a part of the composite subpixel. In the case of dynamically rendering the subpixels in the composite subpixel in a manner of getting away relative to each other, the 3D processing apparatus triggers the multi-viewpoint 3D display screen to switch to 2D display when rendering is conducted to at least one subpixel beyond an outermost end of the composite subpixel. Similarly, in some embodiments of the present disclosure, dynamic rendering of subpixels that move away from each other till they exceed or will exceed the outermost subpixels of the corresponding composite subpixel may be determined by a change in the viewpoint due to a change of the distance. In some embodiments, the change in a distance may be simply detected for determination. For example, there is a correspondence between a distance and the subpixels being dynamically rendered, such as switching to 2D beyond or within a threshold of a predetermined distance, as described in some embodiments below.

It is conceivable that the subpixels that exceed the outermost end of the corresponding composite subpixel may comprise subpixels that exceed one side, such as the subpixel R1 or R6 which exceeds the outermost end of the red composite subpixel shown in Fig. 3B, and may further comprise subpixels that exceed both sides, such as R1 and R6 which exceed the outermost end of the red composite subpixel shown in Fig. 3B. In case of any of the above situations, the 3D processing apparatus plays an image of a 3D video signal in a 2D form.

In some embodiments, the multi-viewpoint 3D display device defines a first distance threshold. The defining manner may be preset upon factory delivery of the multi-viewpoint 3D display device. When a distance between the user and the multi-viewpoint 3D display screen is less than a first distance threshold, the 3D processing apparatus plays an image of the 3D video signal in a 2D form.

In some embodiments, the multi-viewpoint 3D display device defines a second distance threshold, and the second distance threshold is greater than the first distance threshold. The defining manner may be preset upon factory delivery of the multi-viewpoint 3D display device. When a distance between the user and the multi-viewpoint 3D display screen is greater than the second distance threshold, the 3D processing apparatus plays an image of the 3D video signal in a 2D form.

In some embodiments, the multi-viewpoint 3D display device may further comprise a position detection apparatus for detecting position information of the user. For example, the position information of the user includes a spatial position of the user, a distance between the user and the multi-viewpoint 3D display screen, and the like. The position detection apparatus may be, for example, a face detection apparatus that obtains user face position information. The user face position information may comprise, for example, spatial position information of a user face relative to the multi-viewpoint 3D display screen, such as a distance between the user face and the multi-viewpoint 3D display screen, a viewing angle of the user face relative to the multi-viewpoint 3D display screen, and the like. The face detection apparatus may have a visual recognition function, such as a face recognition function, and may detect face information (such as face features) of the user, such as face information of all users in front of the multi-viewpoint 3D display screen. The face detection apparatus may be connected to or integrated with an eye positioning apparatus or may be connected to a 3D processing apparatus, to transmit the detected face information. The face detection apparatus may be provided as a stand-alone apparatus, or may be integrated with the eye positioning apparatus, for example, in a processor with the eye positioning apparatus, or may be integrated in other components or units having similar functions in the multi-viewpoint 3D display device.

In some embodiments, the multi-viewpoint 3D display device may further comprise a priority logic circuit. The priority logic circuit determines a priority user or ranks priorities of users based on position information of at least two users (e.g. face position information of the users). The priority logic circuit may determine a priority user among the at least two users or rank the priorities of the at least two users based on respective position information of the at least two users (e.g. respective face position information of the two users) obtained by the position detection apparatus (e.g. face detection apparatus). The priority user or a priority order of the users may be determined or ranked based on detected distances between the at least two users and the multi-viewpoint 3D display screen. For example, distances between faces or eyes of the at least two users and the multi-viewpoint 3D display screen are detected.

The eye positioning apparatus can detect viewpoint positions of the respective eyes of the at least two users in real time. In response to a conflict between viewpoint positions of the eyes of the priority user or a user with a higher priority among the at least two users, and other users, the 3D processing apparatus renders subpixels, of each composite subpixel, corresponding to the viewpoint position of both eyes of the priority user or the user with the higher priority among the at least two users based on the image of the 3D video signal.

Fig. 4A schematically shows one embodiment in which the 3D processing apparatus renders subpixels based on a determined priority user or a user with a high priority, with rendering of red subpixels R in a red composite subpixel as an example. Rendering of subpixels in other color composite subpixels is also processed in this way. The face detection apparatus detects that a distance between a face of the user *a* and the multi-viewpoint 3D display screen is smaller than a distance between a face of the user b and the multi-viewpoint 3D display screen. A priority determination unit determines the user *a* as a priority user, or ranks the user *a* in a high priority. The eye positioning apparatus detects viewpoint positions of respective eyes of the user *a* and the user *b* in real time. The viewpoint position of a right eye of user *a* conflicts with the viewpoint position of a left eye of user *b.* The 3D processing apparatus generates an image of a viewpoint corresponding to both eyes of the user *a* based on the image of the 3D video signal, and renders the red subpixels R2 and R4 of the red composite subpixel corresponding to the viewpoint position of both eyes of the user a, so as to play a 3D effect to the user *a.* The 3D processing apparatus may also render the red subpixel R6 corresponding to the viewpoint position of the right eye of the user *b* in the red composite subpixel based on the image of the viewpoint corresponding to the left eye of the user b (which is the same as the image of the viewpoint corresponding to the right eye of the user a). Both eyes of the user *b* see the same image, and the 3D processing apparatus plays a 2D effect to the user *b.*

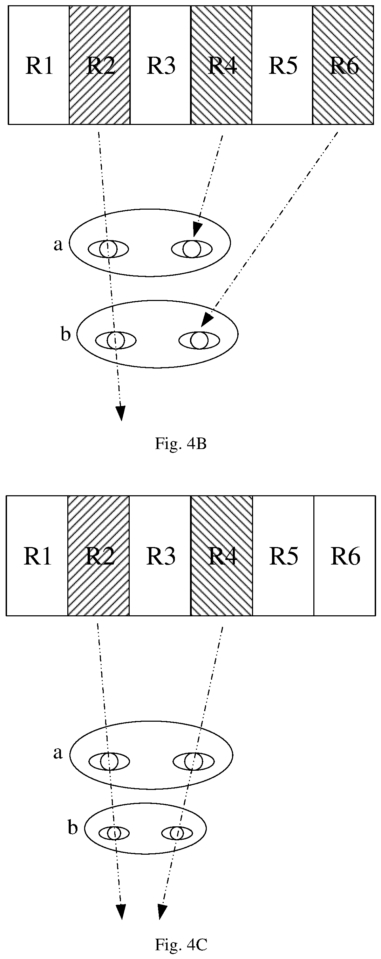

Fig. 4B schematically shows another embodiment in which the 3D processing apparatus renders subpixels based on a determined priority user or a user with a high priority, with rendering of subpixels R in a red composite subpixel as an example. Rendering of subpixels in other composite subpixels is also processed in this way. The face detection apparatus detects that a distance between a face of the user *a* and the multi-viewpoint 3D display screen is smaller than a distance between a face of the user *b* and the multi-viewpoint 3D display screen. A priority determination unit determines the user *a* as a priority user or ranks the user *a* in a high priority. The eye positioning apparatus detects viewpoint positions of respective eyes of the user *a* and the user *b* in real time. The viewpoint position of a left eye of user *a* conflicts with the viewpoint position of a left eye of user *b.* The 3D processing apparatus generates an image of a viewpoint corresponding to both eyes of the user *a* based on the image of the 3D video signal, and renders the red subpixels R2 and R4 of the red composite subpixel corresponding to the viewpoint position of both eyes of the user *a,* so as to play a 3D effect to the user *a.* The 3D processing apparatus may also generate an image of the viewpoint corresponding to the right eye of the user *b* (which is the same as the image of the viewpoint corresponding to the right eye of the user *a*) based on the image of the 3D video signal, and render a red subpixel R6 corresponding to the viewpoint position of the right eye of the user *b* in the red composite subpixel. Both eyes of the user *b* see different images, and the 3D processing apparatus plays the 3D effect to the user *b.*

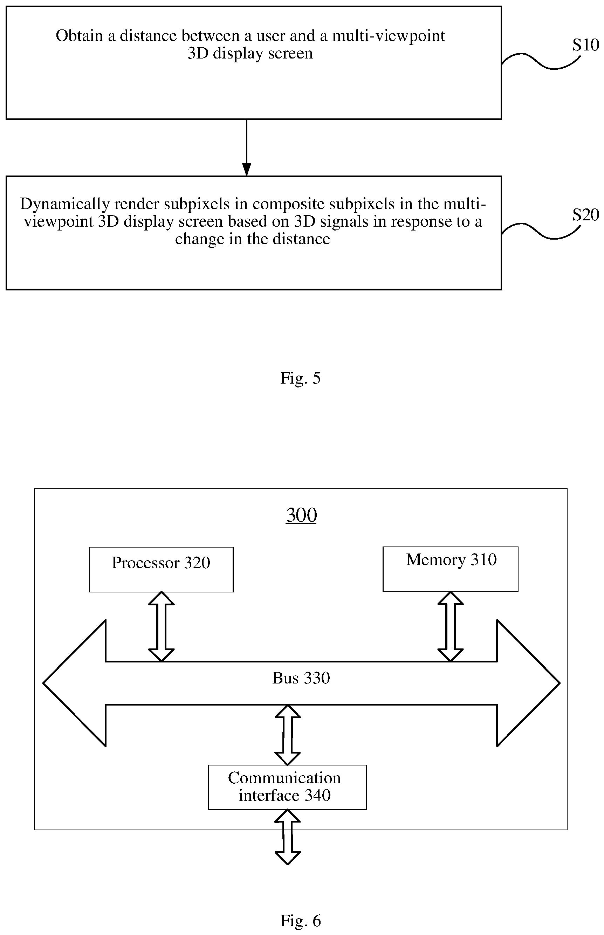

Fig. 4C schematically shows further another embodiment in which the 3D processing apparatus renders subpixels based on a determined priority user or a user with a high priority, with rendering of subpixels R in a red composite subpixel as an example. Rendering of subpixels in other composite subpixels is also processed in this way. The face detection apparatus detects that a distance between a face of the user *a* and the multi-viewpoint 3D display screen is smaller than a distance between a face of the user *b* and the multi-viewpoint 3D display screen. A priority determination unit determines the user *a* as a priority user or ranks the user a in a high priority. The eye positioning apparatus detects viewpoint positions of respective eyes of the user *a* and the user *b* in real time. The viewpoint position of a left eye of user *a* conflicts with the viewpoint position of a left eye of the user *b* , and the viewpoint position of a right eye of the user *a* conflicts with the viewpoint position of a right eye of the user *b.* The 3D processing apparatus generates an image of a viewpoint corresponding to both eyes of the user *a* based on the image of the 3D video signal, and renders the red subpixels R2 and R4 of the red composite subpixel corresponding to the viewpoint position of both eyes of the user *a,* so as to play a 3D effect to the user a. The user *b* can see the same 3D effect at the same time. According to embodiments of the present disclosure, a 3D image display method applied to the above multi-viewpoint 3D display screen is further provided. As shown in Fig. 5, the multi-viewpoint 3D display method comprises:
S10, obtaining a distance between a user and a multi-viewpoint 3D display screen; and
S20, dynamically rendering subpixels in composite subpixels in the multi-viewpoint 3D display screen based on 3D signals in response to a change of a distance between the user and the multi-viewpoint 3D display screen.

In some embodiments, the multi-viewpoint 3D display method comprises:
S100, transmitting a 3D signal;
S200, obtaining a distance between eyes or a face of a user and a multi-viewpoint 3D display screen; and
S300, dynamically rendering subpixels in composite subpixels in the multi-viewpoint 3D display screen based on the 3D signals in response to a change of a distance between the eyes or face of the user and the multi-viewpoint 3D display screen.

In some embodiments, the 3D signal comprises an image of a 3D video signal.

In some embodiments, dynamically rendering subpixels in composite subpixels in the multi-viewpoint 3D display screen based on the 3D signals comprises: dynamically rendering subpixels in composite subpixels in the multi-viewpoint 3D display screen in a manner of getting close relative to each other in response to increase of a distance between eyes of the user and the multi-viewpoint 3D display screen.

In some embodiments, dynamically rendering subpixels in composite subpixels in the multi-viewpoint 3D display screen based on the 3D signals further comprises: dynamically rendering subpixels in composite subpixels in the multi-viewpoint 3D display screen in a manner of getting close relative to each other, and switching to 2D display when a subpixel to be rendered is a same subpixel in the composite subpixels.

In some embodiments, dynamically rendering subpixels in composite subpixels in the multi-viewpoint 3D display screen based on the 3D signals comprises: \dynamically rendering subpixels in composite subpixels in the multi-viewpoint 3D display screen in a manner of getting away relative to each other in response to decrease of a distance between eyes of the user and the multi-viewpoint 3D display screen.

In some embodiments, dynamically rendering subpixels in composite subpixels in the multi-viewpoint 3D display screen based on the 3D signals further comprises: dynamically rendering subpixels in composite subpixels in the multi-viewpoint 3D display screen in a manner of getting away relative to each other, and switching to 2D display when a subpixel to be rendered exceeds an outermost subpixel of the composite subpixels.

In some embodiments, the multi-viewpoint 3D display device including the multi-viewpoint 3D display screen defines a first distance threshold, and the multi-viewpoint 3D display method further comprises: switching to 2D display in response to that aa distance between eyes of the user and the multi-viewpoint 3D display screen is less than the first distance threshold.

In some embodiments, the multi-viewpoint 3D display device defines a second distance threshold; and the second distance threshold is larger than the first distance threshold. The multi-viewpoint 3D display method further comprises: switching to 2D display in response to that aa distance between eyes of the user and the multi-viewpoint 3D display screen is larger than the second distance threshold.

In some embodiments, the display method further comprises:
detecting at least two users to obtain respective position information of the at least two users, and for example, detecting respective face or eye position information of at least two users, such as distances between respective faces or eyes of the at least two users and the multi-viewpoint 3D display screen.

A priority user is determined or priorities of the at least two users are ranked based on position information of the at least two users. For example, spatial position information (spatial coordinates) of the respective faces or eyes of the at least two users is obtained. Distances between the faces or eyes of each of the at least two users and the multi-viewpoint 3D display screen are calculated based on the spatial position information, and the calculated distances are compared, so that the user closest to the multi-viewpoint 3D display screen is the priority user or the user with the high priority, or the user located between the first threshold and the second threshold of the multi-viewpoint 3D display device is the priority user or the user with the high priority.

In some embodiments, determination of a priority user or ranking of priorities of at least two users is determined based on distances of respective faces of the at least two users relative to the multi-viewpoint 3D display screen. For example, a user corresponding to a face with a small distance from the multi-viewpoint 3D display screen is determined as a priority user or a user with a high priority.

In some embodiments, a subpixel of each composite subpixel corresponding to the viewpoint position of the eyes of the priority user or the user with the high priority is rendered based on an image of a 3D video signal in response to a conflict between a viewpoint position of eyes of a priority user or a user with a high priority and viewpoint positions of eyes of other users.

When the viewpoint position of one of the eyes of the priority user or the user with the high priority conflicts with the viewpoint position of one of the eyes of the other users, and the conflicting eye of the priority user or the user with the high priority is opposite to those of the other users, for example, when the viewpoint position of a left eye of the priority user or the user with the high priority conflicts with the viewpoint position of a right eye of other user, or the viewpoint position of a right eye of the priority user or the user with the high priority conflicts with the viewpoint position of a left eye of the other users, an image of a viewpoint corresponding to the eyes of the priority user or the user with the high priority is generated based on an image of a 3D video signal; a subpixel corresponding to the viewpoint position of both eyes of the priority user or the user with the high priority in the composite subpixels is rendered; and a 3D effect is played to the priority user or the user with the high priority. A subpixel corresponding to the viewpoint position of a non-conflicting eye of the other user in each composite subpixel may also be rendered based on the image of the viewpoint corresponding to the conflicting eye of the other user. The conflicting eyes and the non-conflicting eyes of other users see the same image, while other users see a 2D effect.

When the viewpoint position of one of the eyes of the priority user or the user with the high priority conflicts with the viewpoint position of one of the eyes of other users, and the conflicting eye of the priority user or the user with the high priority is not opposite to those of other users, and for example, when the viewpoint position of a left eye of the priority user or the user with the high priority conflicts with the viewpoint position of a right eye of other users, or the viewpoint position of a right eye of the priority user or the user with the high priority conflicts with the viewpoint position of a left eye of other users, an image of a viewpoint corresponding to the eyes of the priority user or the user with the high priority is generated based on an image of a 3D video signal; a subpixel corresponding to the viewpoint position of both eyes of the priority user or the user with the high priority in the composite subpixels is rendered; and a 3D effect is played to the priority user or the user with the high priority. An image of a viewpoint corresponding to a non-conflicting eye of other users may also be generated based on the image of the 3D video signal, and a subpixel corresponding to the viewpoint position of the non-conflicting eye of other users in each composite subpixel may also be rendered based on the image of the viewpoint corresponding to the conflicting eye of other users. The image of the viewpoint corresponding to the non-conflicting eye of other users is different from the image of the viewpoint corresponding to the conflicting eye, and other users see the 3D effect.

When the viewpoint position of both eyes of the priority user or the user with the high priority conflicts with the viewpoint position of both eyes of other users, an image of a viewpoint corresponding to both eyes of the priority user or the user with the high priority is generated based on the image of the 3D video signal; subpixels of each composite subpixel corresponding to the viewpoint position of both eyes of the priority user or the user with the high priority are rendered; and the 3D effect is played jointly to the priority user or the user with the high priority and other users with a viewpoint position conflict of both eyes.

Embodiments of the present disclosure provide a multi-viewpoint 3D display device 300. As shown in Fig. 6, the multi-viewpoint 3D display device 300 comprises a processor 320 and a memory 310. In some embodiments, the multi-viewpoint 3D display device 300 may further comprise a communication interface 340 and a bus 330, wherein the processor 320, the communication interface 340 and the memory 310 complete mutual communication through the bus 330. The communication interface 340 may be configured to transmit information. The processor 320 may call logic instructions in the memory 310, to execute the 3D image display method of the above embodiments.

In addition, the logic instructions in the above memory 310 may be implemented in a form of software functional units and may be stored in a computer readable storage medium when being sold or used as a separate product.

The memory 310 as a computer readable storage medium may be used to store software programs, and computer executable programs, such as program instructions/modules corresponding to the methods in the embodiments of the present disclosure. The processor 320 executes function application and data processing by running the program instructions/modules stored in the memory 310, that is, implements the 3D image display method in the above embodiments.

The memory 320 may comprise a storage program region and a storage data region, wherein the storage program region may store an operating system and at least one application program required by the functions; and the storage data region may store data and the like created according to the use of terminal equipment. In addition, the memory 320 may comprise a high-speed random access memory and a nonvolatile memory.

A computer readable storage medium provided by embodiments of the present disclosure stores computer executable instructions, and the computer executable instructions are configured to perform the 3D image display method.

A computer program product provided by embodiments of the present disclosure comprises computer programs stored on the computer readable storage medium; the computer programs comprise program instructions; and when the program instructions are performed by a computer, the computer will perform the 3D image display method.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory, a random access memory, a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. Unless expressly required, individual components and functions are optional and the order of operations may be changed. Parts and features of some embodiments may be included in or substituted for parts and features of other embodiments. The scope of the embodiments of the present disclosure includes the full scope of the claims, and all available equivalents of the claims. The terms used in the present application are used to describe the embodiments only and not to limit the claims. When used in the present application, the terms "comprising" and the like refer to the presence of at least one of the stated features, but do not exclude the presence of other features.

Those skilled in the art may recognize that the units and algorithm steps of each example described in conjunction with the embodiments disclosed herein can be implemented in electronic hardware, or a combination of computer software and electronic hardware. Those skilled in the art may use different methods for implementing the described functions for each particular application, but such implementations should not be considered beyond the scope of the embodiments of the present disclosure.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. A multi-viewpoint 3D display method, comprising:
obtaining a distance between a user and a multi-viewpoint 3D display screen;
dynamically rendering subpixels in composite subpixels in the multi-viewpoint 3D display screen based on 3D signals in response to a change of the distance.

2. The multi-viewpoint 3D display method according to claim 1, wherein dynamically rendering subpixels in composite subpixels in the multi-viewpoint 3D display screen based on the 3D signals comprises:
dynamically rendering subpixels in composite subpixels in the multi-viewpoint 3D display screen in a manner of getting close relative to each other in response to increase of a distance between eyes of the user and the multi-viewpoint 3D display screen.

3. The multi-viewpoint 3D display method according to claim 2, further comprising:
switching to 2D display when a subpixel to be rendered is a same subpixel in the composite subpixels.

4. The multi-viewpoint 3D display method according to claim 1, wherein dynamically rendering subpixels in composite subpixels in the multi-viewpoint 3D display screen based on the 3D signals comprises:
dynamically rendering subpixels in composite subpixels in the multi-viewpoint 3D display screen in a manner of getting far away relative to each other in response to decrease of a distance between eyes of the user and the multi-viewpoint 3D display screen.

5. The multi-viewpoint 3D display method according to claim 4, further comprising:
switching to 2D display when a subpixel to be rendered exceeds an outermost subpixel of the composite subpixels.

6. The multi-viewpoint 3D display method according to claim 1, 2 or 4, further comprising:
switching to 2D display in response to that a distance between eyes of the user and the multi-viewpoint 3D display screen is less than a first distance threshold.

7. The multi-viewpoint 3D display method according to claim 6, further comprising:
switching to 2D display in response to that a distance between eyes of the user and the multi-viewpoint 3D display screen is larger than a second distance threshold;
wherein the second distance threshold is greater than the first distance threshold.

8. The multi-viewpoint 3D display method according to any one of claims 1-5, further comprising:
detecting at least two users to obtain position information of the at least two users;
determining a priority user based on the position information of the at least two users;
rendering subpixels in composite subpixels in the multi-viewpoint 3D display screen based on 3D signals according to a viewpoint where eyes of the priority user locate.

9. The multi-viewpoint 3D display method according to claim 8, wherein determining the priority user based on the position information of the at least two users comprises:
ranking priorities of the at least two users based on distances between faces of the at least two users and the multi-viewpoint 3D display screen, and determining the priority user according to a ranking result.

10. The multi-viewpoint 3D display method according to claim 8, wherein rendering subpixels in composite subpixels in the multi-viewpoint 3D display screen based on 3D signals according to a viewpoint where eyes of the priority user locate comprises:
obtaining viewpoints where respective eyes of the at least two users locate; and
rendering a subpixel, corresponding to a viewpoint where eyes of the priority user locate, in composite subpixels in the multi-viewpoint 3D display screen based on the 3D signals in response to a conflict between viewpoints where eyes of the priority user and other users locate.

11. A multi-viewpoint 3D display device, comprising:
a multi-viewpoint 3D display screen, comprising a plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints;
an eye positioning apparatus, configured to obtain a distance between a user and the multi-viewpoint 3D display screen;
a 3D processing apparatus, configured to trigger the multi-viewpoint 3D display screen based on 3D signals to dynamically render subpixels in the plurality of composite subpixels in response to a change of a distance.

12. The multi-viewpoint 3D display device according to claim 11, wherein the 3D processing apparatus is configured to trigger the multi-viewpoint 3D display screen to dynamically render subpixels in composite subpixels in a manner of getting close relative to each other in response to increase of a distance between eyes of the user and the multi-viewpoint 3D display screen.

13. The multi-viewpoint 3D display device according to claim 12, wherein the 3D processing apparatus is configured to trigger the multi-viewpoint 3D display screen to switch to 2D display when a subpixel to be rendered is a same subpixel in the composite subpixels.

14. The multi-viewpoint 3D display device according to claim 11, wherein the 3D processing apparatus is configured to trigger the multi-viewpoint 3D display screen to dynamically render subpixels in composite subpixels in a manner of getting far away relative to each other in response to decrease of a distance between eyes of the user and the multi-viewpoint 3D display screen.

15. The multi-viewpoint 3D display device according to claim 14, wherein the 3D processing apparatus is configured to trigger the multi-viewpoint 3D display screen to switch to 2D display when a subpixel to be rendered exceeds an outermost subpixel of the composite subpixels.

16. The multi-viewpoint 3D display device according to claim 11, 12 or 14, wherein the 3D processing apparatus is configured to trigger the multi-viewpoint 3D display screen to switch to 2D display in response to that a distance between eyes of the user and the multi-viewpoint 3D display screen is less than a first distance threshold.

17. The multi-viewpoint 3D display device according to claim 16, wherein
the 3D processing apparatus is configured to trigger the multi-viewpoint 3D display screen to switch to 2D display in response to that a distance between eyes of the user and the multi-viewpoint 3D display screen is larger than a second distance threshold;
wherein the second distance threshold is greater than the first distance threshold.

18. The multi-viewpoint 3D display device according to any one of claims 11-15, further comprising a face detection apparatus and a priority logic circuit, wherein
the face detection apparatus is configured to detect at least two users to obtain position information of the at least two users;
the priority logic circuit is configured to determine a priority user based on the position information of the at least two users;
the 3D processing apparatus is configured to render subpixels in composite subpixels in the multi-viewpoint 3D display screen based on 3D signals according to a viewpoint where eyes of the priority user locate.

19. The multi-viewpoint 3D display device according to claim 18, wherein
the priority logic circuit is configured to rank priorities of the at least two users based on distances between faces of the at least two users and the multi-viewpoint 3D display screen, and determine the priority user according to a ranking result.

20. The multi-viewpoint 3D display device according to claim 18, further comprising: an eye positioning apparatus configured to obtain viewpoints where respective eyes of the at least two users locate;
the 3D processing apparatus is configured to trigger the multi-viewpoint 3D display screen to render a subpixel, corresponding to a viewpoint where eyes of the priority user locate, in composite subpixels based on the 3D signals in response to a conflict between viewpoints where eyes of the priority user and other users locate.

21. A multi-viewpoint 3D display device, comprising:
a processor; and
a memory storing program instructions,
wherein the processor is configured to execute the method of any one of claims 1-10 when executing the program instructions.

22. A computer readable storage medium, storing computer-executable instructions, wherein the computer-executable instructions are configured to execute the method of any one of claims 1-10.

23. A computer program product, comprising computer programs stored on a computer readable storage medium, wherein the computer programs comprise program instructions, and make a computer execute the method of any one of claims 1-10 when the program instructions are executed by the computer.
